(19) Europäisches Patentamt / European Patent Office / Office européen des brevets

(11) **EP 3 203 392 A1**

(12) **EUROPEAN PATENT APPLICATION**

(43) Date of publication:
**09.08.2017 Bulletin 2017/32**

(51) Int Cl.:
**G06F 17/50** *(2006.01)*

(21) Application number: **16154096.8**

(22) Date of filing: **03.02.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Technische Universität München
80333 München (DE)**

(72) Inventor: **LINDNER, Marco
81541 Munich (DE)**

(74) Representative: **Lucke, Andreas
Boehmert & Boehmert
Anwaltspartnerschaft mbB
Pettenkoferstrasse 22
80336 München (DE)**

(54) **COMMON RANK APPROXIMATION IN DISTRIBUTION GRID PROBABILISTIC SIMULATION**

(57) The present disclosure relates to performing a simulation of an electric power distribution network in computationally efficient manner. A first mathematical model of the electric power distribution network is generated, and a simplified second mathematical model is then derived based on the first mathematical model, wherein the first and second models comply with a common rank approximation condition. A computationally efficient probabilistic simulation is performed by applying statistically distributed input values to the input ports of the second mathematical model. The corresponding output values are used for determining at least one input value corresponding to at least one predefined quantile. Then, the determined at least one input value is applied to input ports of the first mathematical model such as to calculate at least one output value at the output ports of the first mathematical model corresponding to the at least one predefined quantile.

Fig. 2

**Description**

FIELD OF THE INVENTION

The present invention is in the field of simulation of electric power distribution networks and provides a method for performing probabilistic simulations of such networks in a computationally efficient manner. The present invention further comprises a system including a numerical processor, wherein the numerical processor is adapted to perform the method of probabilistic simulation, and a corresponding computer program product.

BACKGROUND OF THE INVENTION

Simulation and planning of electric power distribution networks require the capability of analyzing complex interconnectivity and interactions between power distribution elements, electrical loads, energy sources and control units, which are present in the network. Moreover, many of the variables used to describe such networks may represent uncertain random variables having a probabilistic character and are thus difficult to analyze deterministically. For example, photovoltaic systems, wind turbines and distributed electrical loads generate and consume electrical energy depending on probabilistic factors, such as for example the weather and consumer behavior.

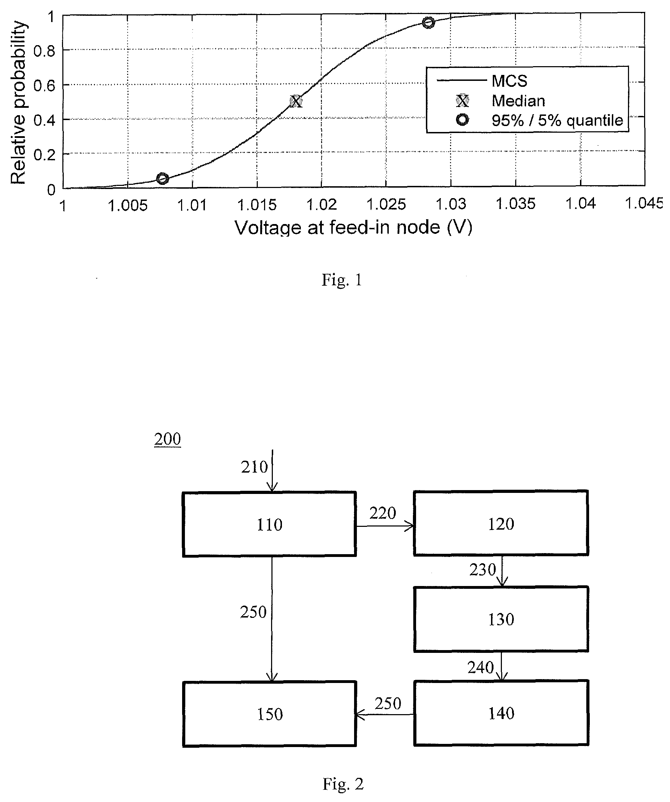

Worst-case assumptions allow circumventing probabilistic considerations of uncertainties, for example by designing an electric power distribution network based on the assumption that all power sources in the network may, at some time, simultaneously run full power generation. However, such worst-case assumptions are generally unreal and result in costly and oversized planning of the electric power distribution network. Alternatively, probabilistic uncertainties can be evaluated by varying the uncertain random variables included in a model of the network, and then recording the corresponding model outputs such as to estimate probabilistic properties of current or future states of the network. Conventionally, the computational cost associated with such integration of uncertainties into the calculation process can reach from worth mentioning to unfeasible, depending on the complexity of the model and also on the number of uncertainties of the network, whereas increasing the number of uncertainties can even lead to an exponential increase of computational cost. The document "Probabilistic Analysis for Capacity Planning in Smart Grid at Residential Low Voltage Level by Monte-Carlo Method" by Du, W., Procedia Engineering 23 (2011): 804-12. doi:10.1016/j.proeng.2011.11.2585, describes a conventional probabilistic simulation of the use of capacities in an electric power distribution network. For this purpose, Monte Carlo simulations are performed using a network model, wherein the model allows probabilistic considerations of decentralized energy resources and random electrical loads, such as for example electric vehicles being coupled to the network. In this respect, Monte Carlo simulations require a significant amount of simulations to be performed by varying the random variables of the model and retrieving the corresponding probability functions of model output variables. The probability functions allow evaluating specific quantiles such as to gain information and improve understanding of model output probabilistic properties. For example, Fig. 1 shows an exemplary cumulative distribution function (CDF) of the voltage at a feed-in node of an electric power distribution network, with 10.000 probabilistic variations of the feed-in power. The figure indicates the quantile 50% (median) marked with the symbol 'x' and the quantiles 5% and 95% marked with the symbol 'o'. For example, the quantile 95% indicates that 95% of the simulations resulted in a voltage at the feed-in node being lower than 1.028V, which may be useful for evaluating a specific network design with reasonable costs. However, as mentioned above, such evaluation may require a significant amount of computational efforts. For example, performing the 10.000 probabilistic variations in a Monte Carlo simulation, 10.000 Newton-Raphson model calls are required, and if the intention is to compare yearly values, like energy losses or yearly reactive energy (VAR-hours), the computational effort can easily rise to an infeasible amount of~350 million Newton-Raphson model calls, which may require an inacceptable computing time of about 122 days when using a conventional computer.

In the last decades, different methods have been proposed to reduce the simulation effort by analytical as well as statistical means, in particular by constructing the output distribution functions in a computationally efficient manner. The dissertation "Robuste Optimierung mit Quantilmaßen auf globalen Metamodellen" by Beate Rhein, 2014, University of Kassel, Germany, provides an overview of the terminology used to describe such probabilistic considerations, and further proposes methods for performing robust optimizations by using quantiles. For this purpose, the respective Monte Carlo simulation is performed by implementing a Meta model representing a model approximation of the original model of the system. In this way, the computational burden of a Monte Carlo based optimization is reduced; and the methods further allow using quantiles to evaluate stability criteria, in particular voltage stability criteria, such as to restrict the optimization to a stable region of attraction close to the optima.

SUMMARY OF THE INVENTION

Accordingly, a problem underlying the invention is to provide computationally efficient methods, and systems and computer programs for performing such methods, wherein the methods are suitable for performing a probabilistic simulation of an electric power distribution network.

This problem is solved by the method for performing a probabilistic simulation of an electric power distribution network as defined in claim 1, by the system as defined in claim 14, wherein the system comprises a numerical processor configured for performing such a method, as well as by a computer program product according to claim 15. Preferable embodiments are defined in the dependent claims.

The method for performing a probabilistic simulation of an electric power distribution network, comprises the following steps of:

- generating a first mathematical model of the electric power distribution network;
- generating a second mathematical model corresponding to a model simplification of the first mathematical model, wherein the first and second mathematical models have a same number of corresponding input ports each adapted to receive an input value, and a same number of corresponding output ports each adapted to output an output value, and wherein the second mathematical model represents a common rank approximation of the first mathematical model such that the first and second mathematical models generate the same or at least nearly the same rank of output values at each of their corresponding output ports when the same sets of input values are applied to their input ports;
- performing probabilistic simulation of the second mathematical model by applying statistically distributed input values to the input ports and calculating the corresponding statistically distributed output values at the output ports;
- determining at least one set of input values which when applied to the input ports of the second mathematical model correspond to at least one predefined quantile of the statistically distributed output values at the output ports of the second mathematical model; and
- applying the determined at least one set of input values of the second mathematical model to input ports of the first mathematical model such as to calculate at least one output value at the output ports of the first mathematical model.

Note that the second mathematical model ideally represents a true common rank approximation of the first mathematical model in the sense that the first and second mathematical models generate precisely the same rank of output values at each of the corresponding output ports when the same sets of input values are applied to the input ports. However, depending on the complexity of the network, in practice it will not always be possible to define a second mathematical model that fully meets this requirement. For this reason, reference is made to "the same or almost the same rank of output values" above. Nevertheless, this does not at all put the usefulness of the method in doubt, any errors due to deviation from the ideal case being in the very nature of statistical approaches. In practical examples, the precision of the method of the invention proved very high, at dramatically decreased computation time.

As discussed above, the computational cost associated with conventional methods of integrating uncertainties into a simulation model can reach from worth mentioning to unfeasible, depending on the complexity of the model and the number of uncertainties included.

In order to circumvent this problem, the method according to the present disclosure does not perform probabilistic simulation directly on the "first" mathematical model representing the electric power distribution network, but proposes performing probabilistic simulation of a second mathematical model, wherein the second mathematical model represents a model simplification of the first mathematical model.

More specifically, according to the method of the present disclosure, a second mathematical model corresponding to a model simplification of the first mathematical model is generated and used for performing probabilistic simulation. The probabilistic simulation of the second mathematical model can be performed by applying statistically distributed input values to input ports of the second mathematical model and calculating the corresponding statistically distributed output values at the output ports of the second mathematical model. Moreover, in order to use these simulation results to deduce statistical information about the outputs of the first mathematical model, the first and second mathematical models are linked by a common rank approximation condition. In other words, according to the present disclosure, the second mathematical model is required to represent a common rank approximation of the first mathematical model, wherein the first and second mathematical models generate the same rank of output values at each of their output ports when the same sets of input values are applied to their input ports. It follows that the first and second mathematical models are required to have the same number of corresponding input ports and the same number of corresponding output ports, wherein each of the input ports is adapted to receive an input value, and wherein each of the output ports is adapted to output an output value. The respective input values and output values can correspond to any type of values or data objects applicable to the input and output ports of the mathematical models, such as for example real or imaginary values, complex values, vectors, data structures, software class objects, or any combination thereof. In order to populate the respective input ports of the first or second mathematical model, a set of input values is required, wherein each set can include a plurality of input values each assigned to a different input port of the respective mathematical model.

Such as to comply with the common rank approximation condition, any sequence of sets of input values, applied to the input ports of the first and second mathematical models, must generate sequences of output values at each of the model output ports complying with the ranking condition. In other words, the rank of output values generated at a particular output port of the first mathematical model must be the same as the same rank of output values generated at the corresponding output port of the second mathematical model. For example, if three different sets of input values are applied to the inputs of the first mathematical model and generate at one of the model output ports the values [1, 6, 4], respectively, applying the same sets of input values to the second mathematical model must generate a sequence of output values at the same (corresponding) output port having the same ranking as for the first mathematical model. For example, a second mathematical model generating one of the sequences [10, 20, 11], [4, 9, 6], [0.01, 0.1, 0.09] or [1000, 5000, 2000] at the respective model output port fulfills the common rank approximation for this particular model output, and for this particular sequence of sets of input values. Thus, if the second mathematical model satisfies this ranking condition for all model outputs, and for all conceivable sets of input values, the second mathematical model represents a common rank approximation of the first mathematical model.

By having the second mathematical model represent a common rank approximation of the first mathematical model, the statistical distribution of the corresponding output ports of both models can be shown to be linked by a monotonicity property; see further discussion below. It follows that the quantiles of model outputs of the first mathematical model can be determined by deriving the same quantiles for the model outputs of the second mathematical model, and then by mapping the results to the corresponding quantiles of the first mathematical model.

In other words, rather than determining quantiles of the model outputs of the first mathematical model by performing the computationally expensive probabilistic simulation of the first mathematical model, a simplified second mathematical model satisfying the above common rank approximation condition is generated and used for simulation. The simplified model represents any model that allows a simpler or faster numerical evaluation than the first mathematical model, and which complies with the common rank approximation condition. Thus, it is not required that the second mathematical model provides an accurate approximation of the first mathematical model, or of the underlying physical system, but it is required that the above ranking property is fulfilled. It follows that the quantiles of the second mathematical model can be calculated by using a computationally efficient probabilistic simulation, for example in a Monte Carlo simulation, and the results can then be mapped to derive corresponding quantiles of the first mathematical model.

Traditional electric power distribution networks represent hierarchical structures, wherein large power generators, such as for example hydraulic or nuclear power plants, are typically connected to centralized feed-in nodes of the network, and the network gradually branches the generated power towards the consumers via medium and/or low voltage network segments. It follows that such traditional electric power distribution networks are planned to arrange thicker but more sparsely distributed cables closer to the centralized power generators, wherefrom a larger amount of thinner cables are branched to reach customers facilities. Although such a hierarchical network structure is well adapted to serve large centralized power plants, implementing decentralized energy resources in such hierarchical network structures may represent a challenge for the designer. Thus, the designer desiring to add components to an existing network structure, or to design a new network structure, may look to simulate different design options prior to implementation.

Accordingly, in an example, the first mathematical model may represent, at least in part, a medium or low voltage electric power distribution network, such as for example the hierarchical network structure discussed above. In a further example, the first mathematical model may include one or more of the following components: centralized energy source, decentralized energy source, photovoltaic system, wind turbine and/or distributed electrical load, to name a few examples.

In other words, the designer of an electric power distribution network may be interested in various factors affecting the cost, efficiency and quality of an existing network, or of various design options related to such networks. In view of this, the designer may define the first mathematical model to represent a current network system, or a specific design option for making proposals to expand the network. In an example, the designer may define the first mathematical model to represent a specific network structure or topology including decentralized electrical loads or power generators coupled to selectable nodes of the network, for example to simulate power flows and electrical properties adhered to the design, prior to implementation. It follows that the first mathematical model represents a mathematical model describing a physical implementation of the electric power distribution network, and may thus be defined based on different levels of abstraction.

For example, the first mathematical model may include input or output values defining electric power flow, electrical load, electrical voltage, electric current, phase between voltage and current, or reactive power, at or between grid nodes of the electric power distribution network, wherein the grid nodes are arranged according to a specific network structure and/or network topology. In an example, the first mathematical model may provide model representations of technical entities used in the electric power distribution network. For example, the first mathematical model may model different technologies and systems used for implementing power plants and electrical loads, for regulating power flow, voltages, currents, phases between voltages and currents, or for regulating reactive power, at or between grid nodes of the electric power distribution network. In an example, the first mathematical model may include electric power cables having different lengths, capacities and/or diameters, voltage control units, active and reactive power dispatch control units and/or load tap changers. More specifically, the first mathematical model may model controllable electrical power transformers, for example transformers including load tap changers such as to adjust between voltage levels. Further controllers may include static Synchronous Series Compensators (SSSC), Unified-Power-Flow-Controllers (UPFC) or Static Synchronous Compensators (STATCOM), to name a few controllers known in the art.

In other words, the network designer may define the first mathematical model depending on the focus of simulation analysis. For example, the network designer looking to restructure or expand an existing electric power distribution network, for example to meet growing customer needs, may consider defining the first mathematical model to represent structural changes to the current network topology, for example by changing cable diameters, adding additional cables, for example in parallel to existing cable strands. The network designer may have the first mathematical model include controller schemes to be validated or pre-calibrated prior to implementation. The network designer may also be interested in adding new power sources or electrical loads at suitable nodes of the network, and thus adapts the first mathematical model to correspond to different layouts arranging power sources and power sinks within the network.

However, as mentioned above, the network designer may also include random variables into the first mathematical model such as to perform a probabilistic simulation of the network. In this way, the random variables may describe uncertain aspects of the network, for example, estimated future power demand at customer premises and/or estimated future power generated by weather dependent power plants or facilities. Moreover, it may be difficult to predict where exactly electrical loads and smaller power generators, such as for example electric vehicles and photovoltaic systems, will be coupled to the network. Thus, the random variables may also be related to uncertainties describing the location of network elements.

As mentioned above, probabilistic uncertainties can be considered in the simulation by varying the uncertain random variables, and then recording corresponding model outputs such as to estimate probabilistic properties of current or future states of the network. In this respect, the probabilistic simulation of the electric power distribution network provides statistical information about model output values. For example, the network designer may select as model output value the estimated future electric power flow, electrical currents or electrical voltages, or variations thereof, at or between nodes of the electric power distribution network, such as to define the object of simulation.

In a more specific example, the network designer may select model output values to represent expected electrical voltage variations at specific nodes of the network, such as to allow verification that the voltage variations do not exceed allowable limits or constraints, such as for example defined in the standards DIN EN 50160 and VDE AR-N 4105.

In a further example, the network designer may select to receive as simulation results statistical information about estimated future values, which can, for example, be used for capacity planning in the electric power distribution network. In this respect, the capacity planning may be performed to prevent overloading in the electric power distribution network, or to prevent or limit the respective voltage fluctuations in the electric power distribution network.

As mentioned above, the second mathematical model can be generated to represent any model that allows a simpler or faster numerical evaluation than the first mathematical model, and that complies with the common rank approximation condition. In order to perform the model simplification, active and passive electrical units in the electric power distribution network can be treated as model elements, and thus simplified individually. For example, it can be shown that the models of passive electric power distribution network units included in the first mathematical model can be simplified without violating the common rank approximation condition, for example by replacing them with simplified models using Taylor series approximations, wherein the simplified models represent a linearization around nominal or expected values of the input and output ports of the first mathematical model.

In an example, generating a second mathematical model corresponding to a model simplification of the first mathematical model may include transferring without simplification models of active electric power distribution network units from the first mathematical model to the second mathematical model, for example to form a linear superposition of model elements in the second mathematical model. In this way, the common rank approximation condition is complied with by maintaining the full functionality of the active electric power distribution network units, as defined in the first mathematical model, whereas the simplification of the overall model rests in the remaining model elements, such as for example in the above linearized models of passive electrical units.

For the purpose of mapping the determined quantiles of the second mathematical model to the first mathematical model, the method includes determining at least one set of input values of the second mathematical model which when applied to the input ports of the second mathematical model correspond to at least one predefined quantile of a statistically distributed output value at an output port of the second mathematical model. For example, it may be determined that an output value $Y_2$ corresponds to a specific quantile at one of the model output ports of the second mathematical model. Then, a corresponding set of input values X is determined, wherein by applying the set of input values X to the corresponding input ports of the second mathematical model, the output value $Y_2$ is generated at the respective model output port. Then, the determined set of input values X of the second mathematical model is applied to the corresponding input ports of the first mathematical model, such as to calculate the corresponding output value $Y_1$ at the corresponding output port of the first mathematical model. It follows that the respective quantile has been determined to correspond to the output value $Y_2$ of the second mathematical model, and the result is then mapped to correspond to the output value $Y_1$ of the first mathematical model, without requiring the computationally expensive probabilistic simulation of the first mathematical model.

It follows that quantiles of the computationally expensive first mathematical model can be determined in a computationally efficient manner by generating a second mathematical model representing a common rank approximation simplification of the first mathematical model, wherein the simplified model allows a simpler or faster numerical evaluation. Then, a probabilistic simulation of the second mathematical model is performed such as to determine specific quantiles. The results are then mapped to derive the same quantiles for the first mathematical model, circumventing the need of performing the computationally expensive probabilistic simulation of the first mathematical model. It follows that a significant reduction in computational cost can be achieved, in particular where the probabilistic simulation of the second mathematical model includes the calculation of more than 10.000, preferably more than 20.000 different scenarios of the electric power distribution network. In this respect, calculating the different scenarios relates to varying the probabilistic input values of the second mathematical model such as to define different scenarios of the electric power distribution network, and then calculating, for each of the respective scenarios, the corresponding probabilistic output values of the second mathematical model.

In an example, the probabilistic simulation of the second mathematical model includes calculating the cumulative distribution function or the probability density function of the statistically distributed output values at the output ports of the second mathematical model. This allows deriving any quantile of the statistically distributed output values at the output ports of the second mathematical model, such as for example quantiles in the range of 1% to 99%, or in the range 5% to 95%, and more specifically quantiles corresponding to 1%, 5%, 10%, 20%, 50%, 80%, 90%, 95% and/or 99% of the generated output values, which can be particularly relevant for assessing technical properties and capacities of the electric power distribution network.

The system for performing a probabilistic simulation of an electric power distribution network comprises a numerical processor configured for performing any of the above method steps, in particular to perform the steps of:

- generating a first mathematical model of the electric power distribution network;
- generating a second mathematical model corresponding to a model simplification of the first mathematical model, wherein the first and second mathematical models have a same number of corresponding input ports each adapted to receive an input value, and a same number of corresponding output ports each adapted to output an output value, and wherein the second mathematical model represents a common rank approximation of the first mathematical model such that the first and second mathematical models generate the same rank of output values at each of their corresponding output ports when the same sets of input values are applied to their input ports;

- performing probabilistic simulation of the second mathematical model by applying statistically distributed input values to the input ports and calculating the corresponding statistically distributed output values at the output ports;
- determining at least one set of input values which when applied to the input ports of the second mathematical model correspond to at least one predefined quantile of the statistically distributed output values at the output ports of the second mathematical model; and
- applying the determined at least one set of input values of the second mathematical model to input ports of the first mathematical model such as to calculate at least one output value at the output ports of the first mathematical model.

The computer program product is configured to be executed on a processor, and when executed on the processor, to carry out the above steps.

SHORT DESCRIPTION OF THE FIGURES

Fig. 1    shows an exemplary cumulative distribution function (CDF) of the voltage at a feed-in node of an electric power distribution network;

Fig. 2    shows a method for performing a probabilistic simulation of an electric power distribution network according to the present disclosure;

Fig. 3    shows examples of valid correlations between the outputs of the first and second mathematical models complying with the common rank approximation condition;

Fig. 4    shows a graph of line power losses wherein the second mathematical model B represents a linearized simplification of the first mathematical model A;

Fig. 5    shows two examples of control schemes used in active network components;

Fig. 6   shows a system including a numerical processor adapted to perform methods of probabilistic simulation of an electric power distribution network.

DESCRIPTION OF THE PREFERRED EMBODIMENTS

For the purposes of promoting an understanding of the principles of the invention, reference will now be made to the preferred embodiments illustrated in the drawings and specific language will be used to describe the same. It will nevertheless be understood that no limitation of the scope of the invention is thereby intended, such alterations and further modifications in the illustrated devices and method and such further applications of the principles of the invention as illustrated therein being contemplated therein as would normally occur now or in the future to one skilled in the art to which the invention relates.

According to one example, this disclosure provides a method 200 for performing a probabilistic simulation of an electric power distribution network as shown in Fig. 2.

In the first step 210 of the method 200, a first mathematical model 110 of the electric power distribution network is generated. As explained above, the first mathematical model 110 provides a model of the electric power distribution network including aspects of uncertainties, which may, for example, be particularly relevant for modeling different and/or yet unknown constellations of distributed power sources, connections, controllers and/or loads in the network. In this respect, the amount of plants as well as their rated powers and positions in the grid can be of significant importance when it comes to determining nodal voltages, losses, reactive power needs, grid reinforcements and/or other characteristics of the network.

It follows that such a first mathematical model 110 of the electric power distribution network may be required to represent many details of technical properties and elements included in the network, as well as their interconnectivity. Consequently, as explained above, performing probabilistic simulation using the first mathematical model 110 can be computationally expensive, and can in fact result in inacceptable computational burden.

In view of this, the method 200 illustrated in Fig. 2 does not perform a complete probabilistic simulation using the first mathematical model 110, such as for example by a Monte Carlo simulation, but rather proposes a step 220 of generating a second mathematical model 120, wherein the second mathematical model 120 correspond to a model simplification of the first mathematical model 110. More specifically, in this example, the first and second mathematical models 110, 120 have the same number of corresponding input ports and the same number of corresponding output ports, and the second mathematical model 120 represents a common rank approximation of the first mathematical model 110.

For example, the object of the simulation may relate to the planning phase of a low voltage distribution grid with an unknown future distribution of photovoltaic plants. Accordingly, an uncertainty vector X of length n of the first mathematical model 110 can include the following vector of random variables representing a set of input values each assigned to a particular input port of the first mathematical model 110:

$$X = \left[ P_{r,DER,1}, P_{r,DER,2}, P_{r,DER,i}, \ldots, P_{r,DER,n} \right],$$

with $P_{r,DER,i}$ representing the rated power of the decentralized energy resource (DER) at a node *'i'* of the network. In an example, the capacity to be installed is fixed according to an extension plan.

Thus, X represents a set of input values of both the first and second mathematical models 110, 120, which changes for each probabilistic variation of the respective random variables. In this respect, when the same sequence of sets of input values are applied to the input ports of the first and second mathematical models 110, 120, the models may generate different sequences, but the sequences are required to have the same rank of output values at each of their corresponding output ports. More specifically, as shown in the below example, if the first mathematical model 110 generates the sequence of outputs Y'(X') for a particular sequence of sets of input values X', the second mathematical model 120 may generate a different sequence of outputs Z'(X') for the same input sequence, but the rank of the outputs Y'(X') and Z'(X') must be the same. In an example, the similarity in the output sequences is numerically evaluated using Spearman's Rank Correlation Coefficient (SRCC), which is defined as Pearson's Correlation Coefficient between two ranked variables.

$$X' = \begin{bmatrix} 1 \\ 2 \\ 3 \end{bmatrix} : \quad Y'(X') = \begin{bmatrix} 1 \\ 6 \\ 4 \end{bmatrix} \begin{matrix} \text{rank} \\ 1 \\ 3 \\ 2 \end{matrix} \quad Z'(X') = \begin{bmatrix} 10 \\ 20 \\ 11 \end{bmatrix} \begin{matrix} \text{rank} \\ 1 \\ 3 \\ 2 \end{matrix}$$

In this respect, the mathematical requirement to be held by Y and Z (corresponding to the sequences Y' and Z', respectively) can be stated as the monotonic increase of Z over Y. In other words, the first partial derivative of Z with respect to Y should be of positive sign:

$$\frac{\partial Z(X)}{\partial Y(X)} > 0$$

$$\frac{\partial Z(X)}{\partial Y(X)} \cdot \frac{\partial X}{\partial X} = \frac{\partial Z(X)}{\partial X} \cdot \left[ \frac{\partial Y(X)}{\partial X} \right]^{-1}$$

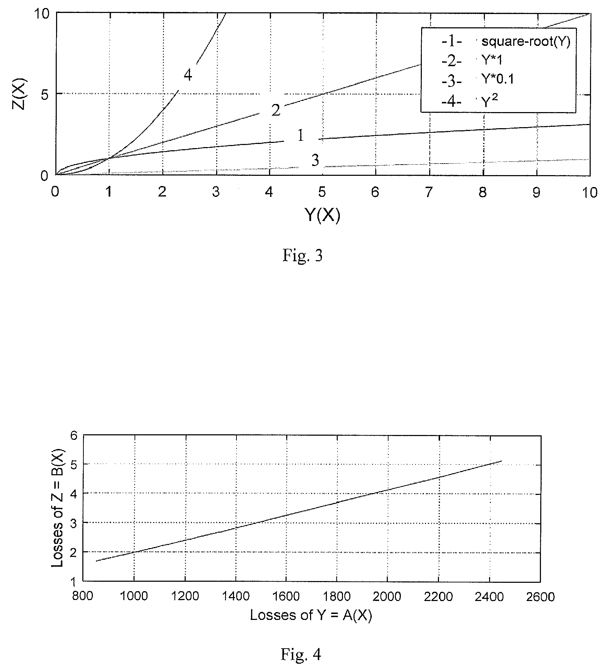

Four examples of such a valid correlation between Z and Y are illustrated in Fig. 3. Thus, possible correlations can be very diverse, linear and non-linear. It is further clear that by focusing on the ranks of Y and Z, the second mathematical model is not required to approximate the real output Y nor to correspond to any physical representation of the underlying electric power distribution network. By contrast, the ranking property is complied with such as to have the output vector Z of the second mathematical model provide the information required to determine probabilistic samples out of X, which in turn are sufficient to generate quantiles for the first mathematical model 110 based on the simpler second mathematical model 120.

In an example, the second mathematical model 120 is generated 220 by simplifying the classic power flow equations of the first mathematical model. In this respect, the power flow equations connecting powers and voltages can be simplified by recognizing that the system can be divided into two parts:

$$B(X) = B_{passive}(X) + B_{active}(X).$$

The first part $B_{passive}$ considers passive network equipment like lines and transformers. The second part $B_{active}$ represents active network equipment bearing mainly nonlinear behavior, like decentralized energy resource (DER) with voltage dependent reactive power dispatch, on load tap changers (OLTC), static synchronous series compensators (SSSC), STATCOMS, etc.

The passive part $B_{passive}$ of the first mathematical model 110 is simplified for the second mathematical model 120 by using a linearization method, such as for example by linearizing the first mathematical model 110 around a nominal value $X_0$ using the first term of its Taylor expansion.

$$B_{passive}(X) = \left. \frac{\partial A(X)}{\partial X} \right|_{X=X_0} \cdot \Delta X.$$

If a convolution process would be used to solve the probabilistic problem, the linearization would be done around the expected values of the random variables (i.e. $\overline{X}$) and the resulting Jacobian would be used for the following calculations. However, this type of linearization is only valid if the deviation of the random variable from the mean or expected value is not too large. For example, if rated powers as well as the positions of the decentralized energy resources would be considered as model inputs, this requirement might be difficult or impossible to hold. Therefore, in this example of the CRA method, the Jacobian is evaluated using the nominal voltage vector $X_0 = [0]$ (i.e. no DER input). In this case, the nominal state of the linearized model equals to no additional integration of decentralized energy generation in the system under scope.

Doing so, the computed values of the linear model, such as, for example, power flows, losses and reactive power needs in the network, deviate from the real solution. However, for example in the case of power infeed only, the computed values generally exhibit a linear correlation wherein the computed values are consistently higher and deviate linearly according to the impedance between the respective nodes and the slack. Due to this linear correlation, the deviation between the first and second mathematical models 110, 120 does not violate the above ranking property. For an exemplary visualization, Fig. 4 shows a corresponding Y/Z-graph of the line power losses, wherein the second mathematical model represents a linearized simplification of the first mathematical model. In this respect, and as discussed above, the monotonicity property illustrated in Fig. 4 indicates that the ranks of the probabilistic samples X are equal within Z and Y, implying that the second mathematical model is a valid simplification of the first mathematical model.

In contrast to passive network elements, the properties of active network equipment can make it difficult, or even impossible, to derive a suitable fixed Jacobian representation defining a linearized model, in particular because of nonlinearities being inherent to active network components. In an example, the active equipment's functionality can still be incorporated by neglecting closed-loop effects adhered to active regulating components of the network. Accordingly, the second mathematical model can, for example, be adapted to calculate voltage or reactive power values, which correspond to the solution of the very first iteration of a Newton-Raphson process. It follows that although the second mathematical model may generate overestimated (unregulated) values, it represents a linear model complying with the above ranking property.

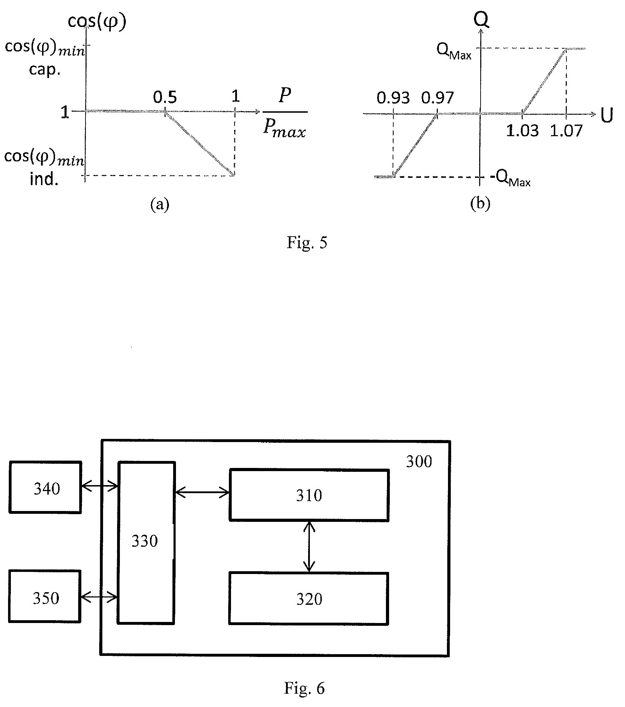

In case of local voltage control by decentralized energy resources or other distributed compensators, their active behavior can be included in $B_{active}$. Exemplarily, the principal characteristics of two operating modes are sketched in Fig. 5:

a) Open loop control: cosφ(P)

b) Closed loop control: Q(U).

In case a, the cosφ-P diagram shows how a displacement factor cos(φ) of a feedin current changes depending on the active power infeed P. Thus, the reactive power dispatch depends on the ratio of active power feed-in over rated power. If the probabilistic variations of scenarios with a fixed decentralized energy resources capacity (e.g. integration of 100 kW PV power in total) and a given irradiation profile are compared, the sum of the reactive power output and, e.g., the yearly reactive energy stay the same. Thus, this scenario can be considered to add an offset which does not affect the rank of the respective output vectors. In other words, this additional term does not affect the above ranking property, and can thus be neglected in the second mathematical model.

In case b, the Q-U diagram shows how the reactive power Q changes depending on the voltage U of the respective node. Thus, the reactive power contributions of the decentralized energy resources depend on the nodal voltages they are connected to. As mentioned above, the closed-loop effects of active components can be ignored such as to allow simplification of the underlying model. This results in the calculated values of the decentralized energy resource active power dispatches being overestimated, primarily because of the missing closed loop effect on the reactance in the grid and secondly because of the current's missing dependency on the voltage. Nevertheless, this "first guess" of the reactive power contribution of active decentralized energy resources provides a valid second mathematical model which complies with the above ranking property, since its overestimation is of systematic nature and thus does not obscure the ranking of the model output values.

In an example, the nonlinear influence of an on load tap changer (OLTC) installed at the distribution transformer is simulated by manipulating the resulting voltage vector (i.e. adjusting the transformer busbar voltage). In principle, any type of characteristics can be implemented within this approach, but the high sensitivity of the transformers voltage drop on reactive power flows should be regarded carefully. Local linear regulators like static synchronous series compensators (SSSCs) can be modeled likewise by manipulating the voltage vector at the corresponding node.

In other words, by focusing on the ranks of Y and Z, the second mathematical model is not required to approximate the real output Y nor to correspond to any physical representation of the underlying electric power distribution network. By contrast, only the ranking property is required to be complied with such as to have the output vector Z of the second mathematical model provide information required to determine probabilistic samples out of X, which in turn are sufficient to generate quantiles of Y based on the simpler second mathematical model 120. In this respect, and as discussed above, it may be expedient to simplify the second mathematical model by considering active and passive components as separate parts of the model, and thus to model these parts individually such as to individually comply with the ranking property.

With reference again to Fig. 2, in an example, after the simplified second mathematical model 120 has been derived, a probabilistic simulation 230 of the second mathematical model 120 is performed by applying statistically distributed input values to the input ports of the second mathematical model 120. In this way, the corresponding statistically distributed output values 130 are generated at the output ports of the second mathematical model 120. As explained above, the second mathematical model 120 represents a simplified version of the first mathematical model 110, for example wherein complex model units have been replaced with their linearized model counterparts complying with the ranking property, and its simulation is thus computationally less costly than simulating the original first mathematical model 110. Moreover, in case of time series simulations, the computational effort can be further reduced by considering the regional character of low- and medium voltage grids. For example, due to their local closeness, many photovoltaic decentralized energy resources are exposed to almost the same irradiation profile, and the impact of each probabilistic variation of X on the, e.g., yearly reactive energy as well as the energy losses and maximum nodal voltages in the grid, are thus correlated. Cloud-drifts and other short-time phenomena can also be smoothed, for example by a 15-minute moving average, such as to further reduce the model complexity.

Then, after performing the probabilistic simulation 230 of the second mathematical model 120, for example in a Monte Carlo simulation, at least one set of input values at the input ports 140 of the second mathematical model 120 is determined 240 which correspond to at least one predefined quantile of the statistically distributed output values at the output ports of the second mathematical model 130. For this purpose, in an example, the statistically distributed output values 130 are used to derive a cumulative distribution function (CDF), for example of the voltage at a feed-in node of the electric power distribution network. Then, based on the cumulative distribution function, the set of input values 140 of the second mathematical model 120 corresponding to predefined quantiles, such as for example the 5% , 50% and 95% quantiles, are determined 240.

Because the first and second mathematical models 110, 120 generate the same ranking of output values, a quantile of the first mathematical model 110 corresponds to a set of input values generating the same quantile when being applied to the second mathematical model 120. In view of this ranking property, the corresponding quantiles 150 of the first mathematical model 110 are generated 250 by applying the determined at least one set of input values of the second mathematical model 130 to input ports of the first mathematical model 110. It follows that the calculated output value at the output ports of the first mathematical model correspond to the predetermined quantiles 150, which have thus been generated without performing the probabilistic simulation on the computationally expensive first mathematical model 110.

For this purpose, in an example, a full Monte Carlo Simulation is performed on the simpler second mathematical model 120 such as to determine quantities of the more complex first mathematical model 110. As an example, the network designer may desire to simulate the yearly reactive energy (VAR-hours) exchanged at a slack bus between low and medium voltage as well as the energy losses in the system. These values can be relevant for an economic assessment and are traditionally evaluated using computationally expensive time series simulations based on the first mathematical model. In fact, if the intention is to compare yearly values, like energy losses or yearly reactive energy (VAR-hours), 10.000 time series simulations may be required. Assuming a time step of 15 minutes, the corresponding computational effort can rise to an infeasible amount of~350 million Newton-Raphson model calls, corresponding to a computing time of about 122 days, when applying the unsimplified, first mathematical model. However, applying the above model simplifications to derive and run the simulations based on the simpler second mathematical model 120 significantly reduces the computational burden. More specifically, in the above example, a time saving of up to a factor of 9000 can be achieved.

Fig. 6 illustrates a system 300 including a numerical processor 310, wherein the numerical processor 310 is adapted to perform the above methods of probabilistic simulation of the electric power distribution network 200 in a computationally efficient manner. In Fig. 6, the numerical processor 310 is coupled to a memory unit 320, wherein the memory unit 320 may store the data, settings, models and program required for performing the above methods 200 on the numerical processor 310. Moreover, the system 300 includes an interface unit 330 allowing to exchange data with the environment, such as for example to receive user inputs via a keyboard or touch panel 340, or to display simulation progress and results on a display device 350.

The embodiments described above and the accompanying figures merely serve to illustrate the method and devices according to the present invention, and should not be taken to indicate any limitation thereof. The scope of the patent is solely determined by the following claims.

LIST OF REFERENCE SIGNS

110    first mathematical model
120    second mathematical model
130    statistically distributed output values of the second mathematical model
140    input values of the second mathematical model corresponding to predefined quantiles

150 quantiles of the first mathematical model
200 method for performing a probabilistic simulation of an electric power distribution network
210 generate a first mathematical model of an electric power distribution network
220 generate a second mathematical model corresponding to a model simplification of the first mathematical model
230 perform a probabilistic simulation by using the second mathematical model
240 determine input values of the second mathematical model which correspond to at least one predefined quantile
250 generate quantiles of the first mathematical model by applying the determined input values of the second mathematical model to input ports of the first mathematical model
300 system
310 numerical processor
320 memory unit
330 interface unit
340 keyboard or touch panel
350 display.

**Claims**

1. A method for performing a probabilistic simulation of an electric power distribution network (200), comprising:

   generating a first mathematical model of the electric power distribution network (210); generating a second mathematical model corresponding to a model simplification of the first mathematical model (220), wherein the first and second mathematical models (110, 120) have a same number of corresponding input ports each adapted to receive an input value, and a same number of corresponding output ports each adapted to output an output value, and
   wherein the second mathematical model (120) represents a common rank approximation of the first mathematical model (110) such that the first and second mathematical models generate the same or at least nearly the same rank of output values at each of their corresponding output ports when the same sets of input values are applied to their corresponding input ports;
   performing probabilistic simulation of the second mathematical model (230) by applying statistically distributed input values to the input ports and calculating the corresponding statistically distributed output values at the output ports (130);
   determining at least one set of input values (140) which when applied to the input ports of the second mathematical model (240) corresponds to at least one predefined quantile of the statistically distributed output values at the output ports of the second mathematical model (130); and
   applying the determined at least one set of input values of the second mathematical model (140) to input ports of the first mathematical model (110) such as to calculate at least one output value at the output ports of the first mathematical model (150).

2. The method (200) according to claim 1, wherein the electric power distribution network represents, at least in part, a medium or low voltage electric power distribution network.

3. The method (200) according to claim 1 or 2, wherein the electric power distribution network includes one or more of the following components: decentralized energy source, photovoltaic system, wind turbine, distributed electrical load, electric power cable, voltage control unit, active and reactive power dispatch control unit, and/or on load tap changer.

4. The method (200) according to any of the preceding claims, wherein at least one of the input or output values received or output by the first mathematical model (110) defines an electric power flow, an electrical load, an electrical voltage, an electric current, a phase between voltage and current, or a reactive power, at or between grid nodes of the electric power distribution network.

5. The method (200) according to any of the preceding claims, wherein the probabilistic simulation of the second mathematical model (230) includes calculating a cumulative distribution function or a probability density function of the statistically distributed output values (130) at the output ports of the second mathematical model (120).

6. The method (200) according to any of the preceding claims, wherein the probabilistic simulation of the second mathematical model (230) is performed in a numerical Monte Carlo simulation.

7. The method (200) according to any of the preceding claims, wherein the probabilistic simulation of the second mathematical model (230) includes the calculation of more than 10.000, preferably more than 20.000 different scenarios of the electric power distribution network.

8. The method (200) according to any of the preceding claims, wherein the at least one predefined quantile of the statistically distributed output values at the output ports of the second mathematical model is in the range of 1% to 99%, or in the range 5% to 95%, and preferable includes 1%, 5%, 10%, 20%, 50%, 80%, 90%, 95% and/or 99%.

9. The method (200) according to any of the preceding claims, wherein generating (220) a second mathematical model (120) corresponding to a model simplification of the first mathematical model (110) includes replacing models of passive electric power distribution network units included in said first mathematical model (110) with simplified models using Taylor series approximation, preferably by performing a linearization around a nominal value.

10. The method (200) according to any of the preceding claims, wherein generating (220) a second mathematical model (120) corresponding to a model simplification of the first mathematical model (110) includes transferring without simplification models of active electric power distribution network units from the first mathematical model (110) to the second mathematical model (120), preferably to form a linear superposition of model elements in the second mathematical model (120).

11. The method (200) according to any of the preceding claims, wherein the probabilistic simulation (230) of the electric power distribution network provides statistical information about estimated future values related to electric power flow, electrical current or electrical voltage variation at or between nodes of the electric power distribution network.

12. The method (200) according to claim 11, wherein the statistical information about estimated future values is used for capacity planning in the electric power distribution network.

13. The method (200) according to claim 12, wherein the capacity planning is performed to prevent overloading in the electric power distribution network, or wherein the capacity planning is performed to prevent or limit voltage fluctuations in the electric power distribution network.

14. A system (300) for performing a probabilistic simulation of an electric power distribution network, comprising a numerical processor (310) configured for performing the method (200) according to any of the preceding claims.

15. A computer program product, which, when executed on a processor, carries out the method according to any of the claims 1 to 13.

Fig. 1

Fig. 2

Fig. 3

Fig. 4

Fig. 5

Fig. 6

Europäisches
Patentamt

European
Patent Office

Office européen
des brevets

# EUROPEAN SEARCH REPORT

Application Number

EP 16 15 4096

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN P ET AL: "Probabilistic load flow: A review", ELECTRIC UTILITY DEREGULATION AND RESTRUCTURING AND POWER TECHNOLOGIES, 2008. DRPT 2008. THIRD INTERNATIONAL CONFERENCE ON, IEEE, PISCATAWAY, NJ, USA, 6 April 2008 (2008-04-06), pages 1586-1591, XP031254106, ISBN: 978-7-900714-13-8 | 1-3,6-8, 11-15 | INV. G06F17/50 |
| A | * abstract * * page 1586 - page 1588, column 1 * ----- | 4,5,9,10 | |
| A,D | DU W ED - ISLAM A K M SADRUL ET AL: "Probabilistic Analysis for Capacity Planning in Smart Grid at Residential Low Voltage Level by Monte-Carlo Method", PROCEDIA ENGINEERING, vol. 23, 2011, pages 804-812, XP028343786, ISSN: 1877-7058, DOI: 10.1016/J.PROENG.2011.11.2585 [retrieved on 2011-12-19] * the whole document * ----- | 1-15 | |
| T | Marco Lindner ET AL: "Common Rank Approximation - A new method to speed up probabilistic calculations in distribution grid planning", , 1 May 2016 (2016-05-01), XP055291701, Retrieved from the Internet: URL:https://www.researchgate.net/profile/Marco_Lindner/publication/302913878_Common_Rank_Approximation_-_A_new_method_to_speed_up_probabilistic_calculations_in_distribution_grid_planning/links/57333da708ae9f741b260def.pdf?origin=publication_detail [retrieved on 2016-07-27] * the whole document * ----- | | TECHNICAL FIELDS SEARCHED (IPC) G06F |

The present search report has been drawn up for all claims

| Place of search | Date of completion of the search | Examiner |
|---|---|---|
| Munich | 29 July 2016 | Radev, Boyan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DU, W.** Probabilistic Analysis for Capacity Planning in Smart Grid at Residential Low Voltage Level by Monte-Carlo Method. *Procedia Engineering,* 2011, vol. 23, 804-12

- **BEATE RHEIN.** *Robuste Optimierung mit Quantilmaßen auf globalen Metamodellen,* 2014